# EUROPEAN PATENT APPLICATION

(11) **EP 2 899 922 A1**
(43) Date of publication of application: **29.07.2015**
(21) Application number: 12885168.0
(22) Date of filing: 20.09.2012
(51) Int. Cl.: H04L 12/28

(54) **INFORMATION PROCESSING SYSTEM, MANAGEMENT DEVICE, MANAGEMENT PROGRAM, AND MANAGEMENT METHOD**

(71) Applicant: Fujitsu Limited, Kawasaki-shi, Kanagawa 211-8588 (JP)
(72) Inventor: SHINOHARA, Makoto, Kawasaki-shi Kanagawa 211-8588 (JP); NAKASHIMA, Kohta, Kawasaki-shi Kanagawa 211-8588 (JP); HASHIMOTO, Tsuyoshi, Kawasaki-shi Kanagawa 211-8588 (JP)
(74) Representative: Lewin, David Nicholas
(86) International application number: PCT/JP2012/074024
(87) International publication number: WO 2014/045366

(57) **Abstract**

An information processing system includes: plural switches; plural information processing apparatuses; and a management apparatus. And the management apparatus includes: an association unit that performs associating first switch identifiers included in first information with second switch identifiers included in second information by calculating a maximum matching in a bipartite graph for the first switch identifiers and the second switch identifiers, in which the first information represents designed cable connections between the plural switches and the plural information processing apparatuses, and the second information represents actual cable connections between the plural switches and the plural information processing apparatuses; a conversion unit that converts, according to a result of the associating, the first switch identifiers included in the first information to the second switch identifiers; and a detector that detects a difference between the first information that includes the first switch identifiers which were converted and the second information.

## Description

### Technical Field

This invention relates to an information processing system, a management apparatus, and a management method.

### Background Technology

Along with enlargement of a cluster system constructed in a data center or the like, a network to which each compute node in the cluster system is connected becomes large. For example, when tens of thousands of compute nodes exist, sometimes thousands of switches are arranged in the network. Because compute nodes and switches are connected by tens of thousands of cables in such a large cluster system, it is very difficult to manually find if there are incorrect cable connections.

There is a technique to find incorrect cable connections among devices. Specifically, a designed configuration is compared with a configuration in actual operation by matching design data concerning devices in a network system and a relation among the devices with data concerning whether or not the devices in the network system in actual operation exist and a relation among the devices.

However, an identifier (for example, node ID in InfiniBand, or MAC address and IP address on Ethernet (registered mark)) is allocated to a switch after starting operation of the network system. Therefore, there is a problem that it is impossible to match in case where association between an identifier allocated to the switch when designing and an identifier allocated to the switch after starting the operation of the network system is unclear.

Moreover, there is a technique in which information on connected devices, which is relevant to a configuration for the devices, is obtained plural times, a majority decision is made for the obtained connection device information, and the most probable connection device information is adopted. However, even if an actual connection relation is decided by a majority rule, it is impossible to solve the above problem.

### Prior technical documents

### Patent Documents

Patent Document 1: International Publication Pamphlet No. WO 2006/117832
Patent Document 2: Japanese Laid-open Patent Publication No. 2000-31992

### Summary of the Invention

### Object to be solved by the Invention

As one aspect, an object of this invention is to provide a technique for detecting incorrect cable connections.

### Means for solving the Problem

An information processing system includes relating to this invention includes: plural switches; plural information processing apparatuses; and a management apparatus. And the management apparatus comprises: a memory; and a processor configured to use the memory and execute a process. And the process includes: associating first switch identifiers included in first information with second switch identifiers included in second information by calculating a maximum matching in a bipartite graph for the first switch identifiers and the second switch identifiers, in which the first information represents designed cable connections between the plural switches and the plural information processing apparatuses, and the second information represents actual cable connections between the plural switches and the plural information processing apparatuses; converting, according to a result of the associating, types of the first switch identifiers included in the first information to types of the second switch identifiers; and detecting a difference between the first information that includes the first switch identifiers whose types were converted and the second information.

### Brief description of the drawings

FIG. 1 is a diagram depicting an outline of a system relating to a first embodiment;
FIG. 2 is a diagram depicting an example of cable connections that include wrong cable connections;
FIG. 3 is a functional block diagram of a management apparatus;
FIG. 4 is a diagram depicting an example of design data stored in a design data storage unit;
FIG. 5 is a diagram depicting an example of data stored in an end point data storage unit;
FIG. 6 is a diagram depicting a processing flow of a main processing;
FIG. 7 is a diagram depicting a processing flow of a first association processing relating to the first embodiment;
FIG. 8 is a diagram depicting an example of connection data stored in a connection data storage unit;
FIG. 9 is a diagram to explain the first association processing relating to the first embodiment;
FIG. 10 is a diagram depicting cable connections based on the connection data and cable connections based on the design data;
FIG. 11 is a diagram depicting an example of data stored in a first association table storage unit in the first embodiment;
FIG. 12 is a diagram depicting a processing flow of a second association processing;
FIG. 13 is a diagram depicting an example of a bipartite graph;
FIG. 14 is a diagram depicting an example of the bipartite graph;
FIG. 15 is a diagram depicting an example of data stored in a second association table storage unit;
FIG. 16 is a diagram depicting a processing flow of a detection processing;
FIG. 17 is a diagram to explain the detection processing;
FIG. 18 is diagram depicting an example of display data;
FIG. 19 is a diagram depicting a processing flow of the first association processing relating to a second embodiment;
FIG. 20 is a diagram depicting an example of data stored in the first association table storage unit in the second embodiment;
FIG. 21 is a functional block diagram of a management apparatus in a third embodiment;
FIG. 22 is a diagram depicting a processing f low of a processing performed by a regenerator;
FIG. 23 is a diagram depicting an example of a list of CEP (Communication End Point) IDs;
FIG. 24 is a diagram depicting an example of a list of CEP names;
FIG. 25 is a diagram depicting an outline of a system relating to a fourth embodiment;
FIG. 26 is a diagram depicting a processing flow of the first association processing relating to the fourth embodiment; and FIG. 27 is a functional block diagram of a computer.

### Mode for carrying out the invention

### [Outline of embodiment]

In this embodiment, a network is regarded as a graph in which an apparatus on the network (or a network interface) corresponds to a vertex, and a cable (or a bundle of cables) connecting apparatuses corresponds to an edge. "Network topology" corresponds to an isomorphism class of the graph generated in this manner.

A set of all permutations which do not change a shape of the graph forms a group. This group is called an automorphism group of the graph. If an actual connection situation is in accordance with design data, a graph based on connection data representing the actual connection situation and a graph based on the design data are isomorphic. In the following, a method to identify an incorrect cable connection based on such a graph theory will be explained.

### [Embodiment 1]

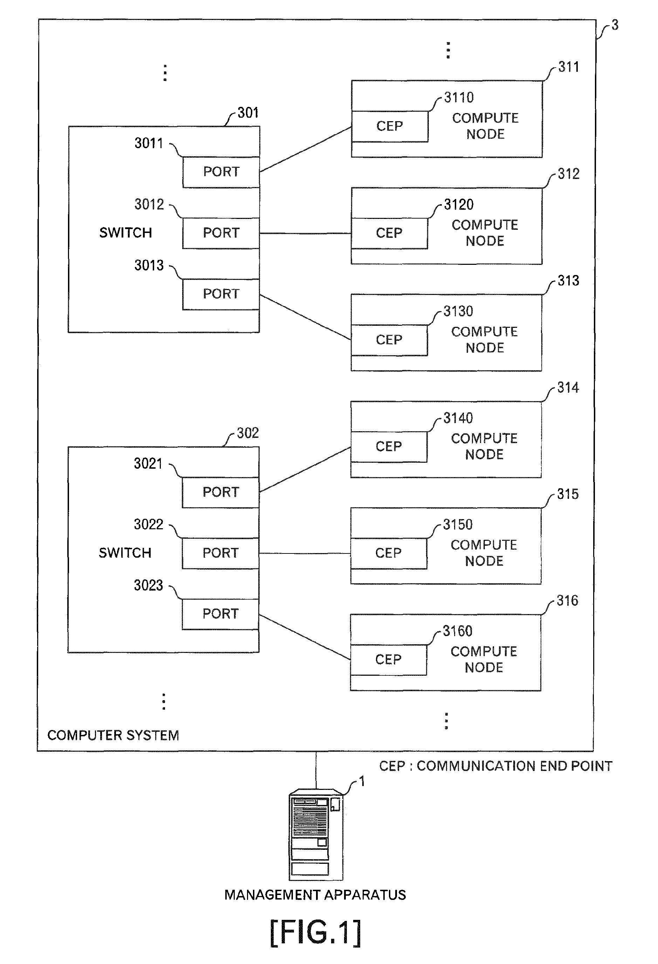

FIG. 1 illustrates an outline of a system relating to a first embodiment. A computer system 3 which is a cluster system constructed in a data center or the like includes plural switches and plural compute nodes. Although FIG. 1 illustrates a switch 301, a switch 302, and compute nodes 311 to 316 for ease of an explanation, the number of switches and the number of compute nodes are not limited.

The switch 301 and the switch 302 include plural ports. The switch 301 includes ports 3011 to 3013. The switch 302 includes ports 3021 to 3023. In FIG. 1, although the number of the ports on the switch 301 is 3, and the number of the ports on the switch 302 is 3, the numbers are not limited.

The compute nodes 311 to 316 include a connection end point (hereinafter referred to CEP) . The CEP is, for example, a host channel adapter or a network interface card. The compute node 311 includes a CEP 3110. The compute node 312 includes a CEP 3120. The compute node 313 includes a CEP 3130. The compute node 314 includes a CEP 3140. The compute node 315 includes a CEP 3150. The compute node 316 includes a CEP 3160.

A port on a switch and a CEP on a compute node are physically connected by a cable (for example, an InfiniBand cable or an Ethernet (registered trademark) cable). The port 3011 on the switch 301 is connected to the CEP 3110 on the compute node 311. The port 3012 on the switch 301 is connected to the CEP 3120 on the compute node 312. The port 3013 on the switch 301 is connected to the CEP 3130 on the compute node 313. The port 3021 on the switch 302 is connected to the CEP 3140 on the compute node 314. The port 3022 on the switch 302 is connected to the CEP 3150 on the compute node 315. The port 3023 on the switch 302 is connected to the CEP 3160 on the compute node 316.

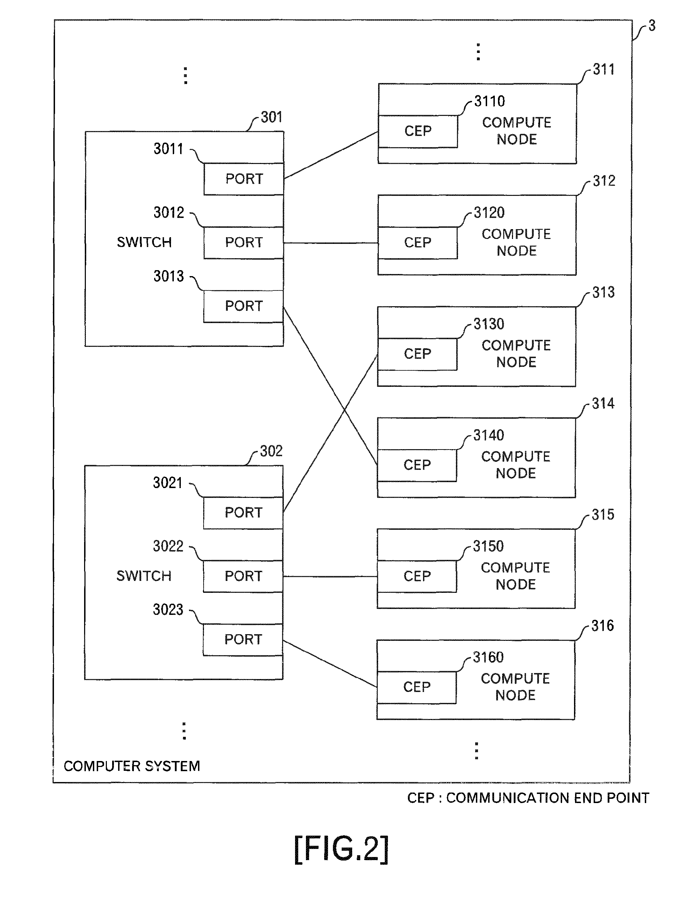

Assuming that cable connections illustrated in FIG. 1 are proper (namely, cable connections are in accordance with the design data), cable connections illustrated in FIG. 2 are incorrect. In FIG. 2, the port 3013 on the switch 301 is not connected to the CEP 3130 on the compute node 313 but it is connected to the CEP 3140 on the compute node 314. Moreover, the port 3021 on the switch 302 is not connected to the CEP 3140 on the compute node 314 but it is connected to the CEP 3130 on the compute node 313. In this embodiment, as illustrated in FIG. 2, a status in which the cable connections are not in accordance with design data is considered as a status in which the cable connections include wrong cable connections. However, the cable connections that include the wrong cable connections are not limited to the status illustrated in FIG. 2.

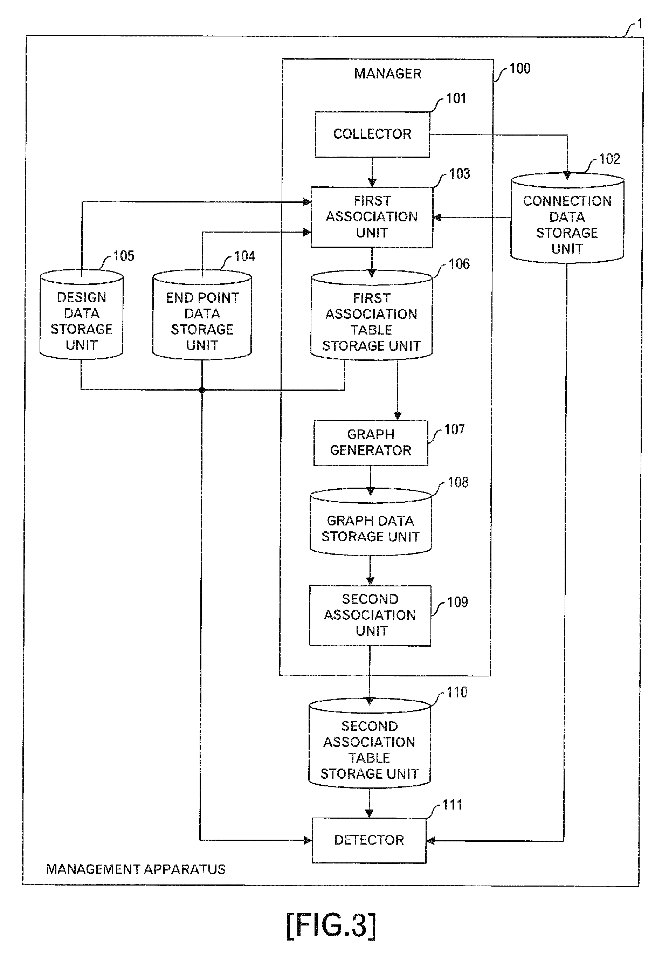

A management apparatus 1 which performs a main processing is connected to the computer system 3. FIG. 3 illustrates a functional block diagram of the management apparatus 1. The management apparatus 1 includes a manager 100, a connection data storage unit 102, an end point data storage unit 104, a design data storage unit 105, a second association table storage unit 110, and a detector 111. The manager 100 includes a collector 101, a first association unit 103, a first association table storage unit 106, a graph generator 107, a graph data storage unit 108, and a second association unit 109.

The collector 101 generates connection data by collecting data representing a connection situation between switches and compute nodes, and stores the connection data in the connection data storage unit 102. The first association unit 103 performs a processing by using data stored in the connection data storage unit 102, data stored in the design data storage unit 105, and data stored in the end point data storage unit 104, and stores a result of the processing in the first association table storage unit 106. The graph generator 107 performs a processing by using data stored in the first association table storage unit 106, and stores a result of the processing in the graph data storage unit 108. The second association unit 109 performs a processing by using data stored in the graph data storage unit 108, and stores a result of the processing in the second association table storage unit 110. The detector 111 performs a processing by using data stored in the first association table storage unit 106 and data stored in the second association table storage unit 110.

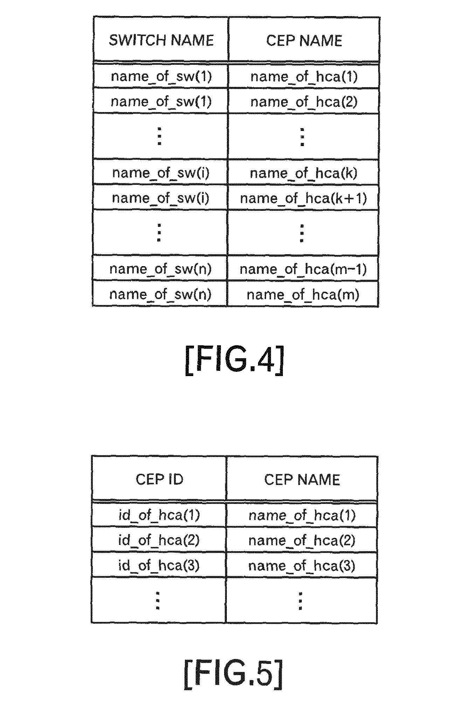

FIG. 4 illustrates an example of design data stored in the design data storage unit 105. In the example of FIG. 4, switch names and CEP names are stored. The design data is data that represents designed cable connections. For example, data in the first row represents that a switch whose switch name is "name_of_sw(1)" is connected to a CEP whose CEP name is "name_of_hca(1)". The switch name is assigned to a switch at timing when an administrator designs the computer system 3. The CEP name is assigned to a CEP at the timing when the administrator designs the computer system 3. The CEP name is named so that a CEP ID is obtained from the CEP name.

FIG. 5 illustrates an example of data stored in the end point data storage unit 104. In the example of FIG. 5, CEP IDs and CEP names are stored. For example, data in the first row represents that a CEP name of a CEP whose CEP ID is "id_of_hca(1)" is "name_of_hca(1)". In the case of a CEP, it is possible to obtain a CEP ID from a CEP name. In this embodiment, data representing association between a CEP ID and a CEP name is stored in the end point data storage unit 104 in advance.

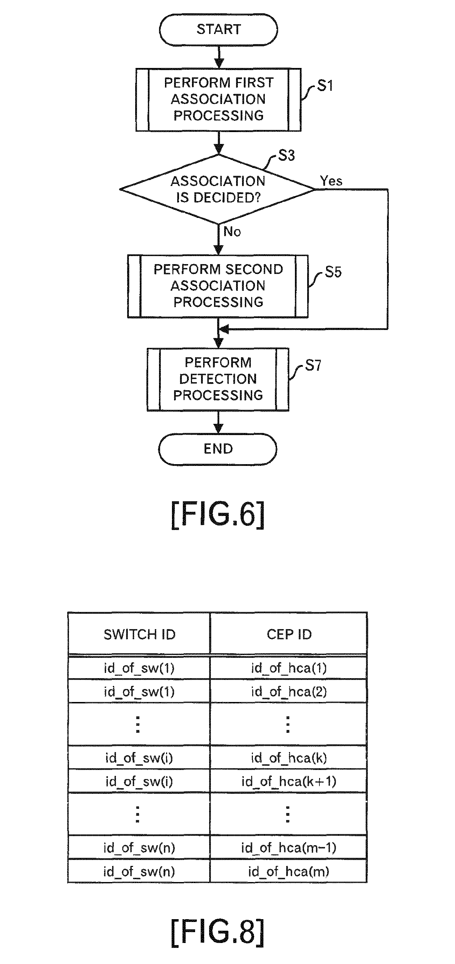

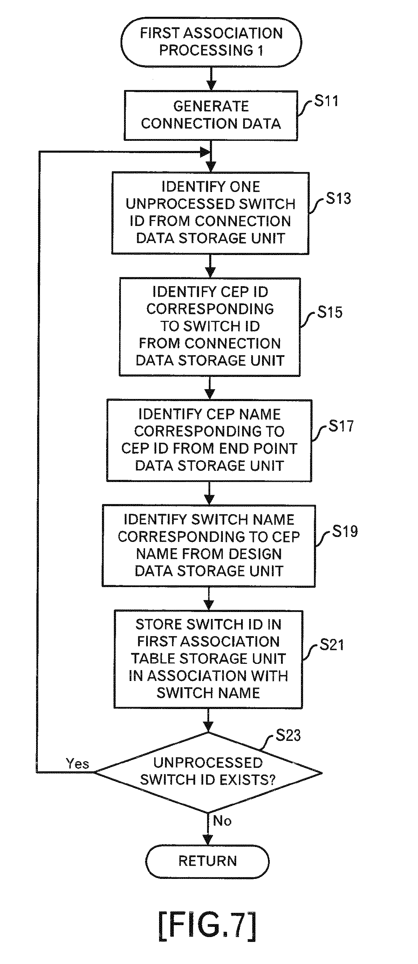

Next, operation of the management apparatus 1 is explained by using FIGs. 6 to 18. For example, when the management apparatus 1 accepts a detection instruction for wrong cable connections from an administrator, the management apparatus 1 starts a processing. First, the manager 100 included in the management apparatus 1 performs a first association processing (FIG. 6: step S1). The first association processing is explained by using FIGs. 7 to 11.

The collector 101 included in the manager 100 collects data representing a connection status between switches and CEPs, and generates connection data (FIG. 7: step S11). The collector 101 stores the generated connection data in the connection data storage unit 102. For example, in the case of InfiniBand, it is possible to collect data representing a connection status by using a technique called subnet management.

FIG. 8 illustrates an example of connection data stored in the connection data storage unit 102. In the example of FIG. 8, switch IDs and CEP IDs are stored. For example, data in the first row represents that a switch whose switch ID is "id_of_sw (1) " is connected to a CEP whose CEP ID is "id_of_hca(1)". A switch ID and a CEP ID are, for example, node IDs in the case of InfiniBand, and, for example, MAC addresses and IP addresses in the case of Ethernet (registered trademark).

Returning to the explanation of FIG. 7, the collector 101 outputs a request for execution of a processing to the first association unit 103. Accordingly, the first association unit 103 identifies an unprocessed switch ID from the connection data storage unit 102 (step S13).

The first association unit 103 identifies a CEP ID corresponding to the switch ID identified at the step S13 from the connection data storage unit 102 (step S15).

The first association unit 103 identifies a CEP name corresponding to the CEP ID identified at the step S15 from the end point data storage unit 104 (step S17).

The first association unit 103 identifies a switch name corresponding to the CEP name identified at the step S17 from the design data storage unit 105 (step S19).

The first association unit 103 stores the switch ID identified at the step S13 in the first association table storage unit 106 in association with the switch name identified at the step S19 (step S21) . The processing of the step S21 is skipped when data representing identical association has already been stored in the first association table storage unit 106.

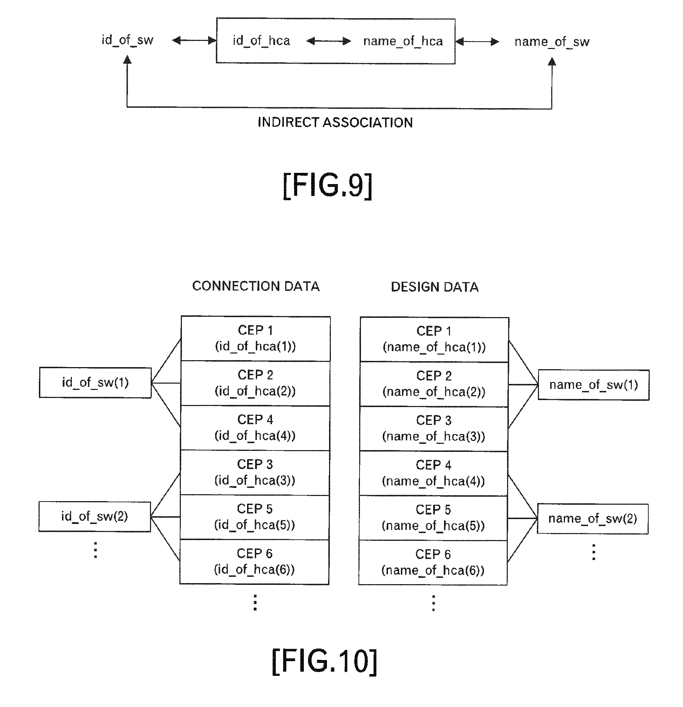

Processings at the step S13 to S21 are explained by using FIGs. 9 and 10. The processings at the step S13 to S21 are processings to obtain a switch ID and a switch name possible to be associated. As described in the background, there is a problem that a switch ID (id_of_sw) included in the connection data with a switch name (name_of_sw) included in the design data cannot be associated. On the other hand, it is possible to associate a CEP ID (id_of_hca) included in the connection data with a CEP name (name_of_hca) included in the designdata. Therefore, as described in FIG. 9, a switch ID is indirectly associated with a switch name by using association for a CEP.

Association is not always decided (in other words, a switch ID is not associated with a switch name on a one-to-one basis) by only performing processings at the step S13 to S21. As an example, a status as illustrated in FIG. 10 is considered. The left side of FIG. 10 represents cable connections based on the connection data (in other words, actual cable connection), and the right side of FIG. 10 represents cable connections based on the design data. As a premise, a CEP ID of a CEP 1 is "id_of_hca(1)", and a CEP name of that is "name_of_hca(1)". Moreover, a CEP ID of a CEP 2 is "id_of_hca(2)", and a CEP name of that is "name_of_hca(2)". Moreover, a CEP ID of a CEP 3 is "id_of_hca (3) ", and a CEP name of that is "name_of_hca(3)". Moreover, a CEP ID of a CEP 4 is "id_of_hca(4)", and a CEP name of that is "name_of_hca (4) ". Moreover, a CEP ID of a CEP 5 is "id_of_hca(5)", and a CEP name of that is "name_of_hca(5)". Moreover, a CEP ID of a CEP 6 is "id_of_hca (6)", and a CEP name of that is "name_of_hca(6)".

In the status as illustrated in FIG. 10, the switch ID "id_of_sw(1)" is associated with the switch name "name_of_sw(1)" through the CEP 1 and the CEP 2, and is associated with the switch name "name_of_sw(2)" through the CEP 4. Moreover, the switch ID "id_of_sw(2)" is associated with the switch name "name_of_sw(1)" through the CEP 3, and is associated with the switch name "name_of_sw (2)" through the CEP 5 and the CEP 6. In other words, there is a possibility that a switch name of a switch whose switch ID is "id_of_sw(1)" is "name_of_sw(1)" or "name_of_sw(2)", and a switch name of a switch whose switch ID is "id_of_sw(2) " is "name of_sw(1)" or "name_of_sw(2) ". From the example illustrated in FIG. 10, for example, when a switch has n (n is a natural number) ports, n ways of association exist at a maximum.

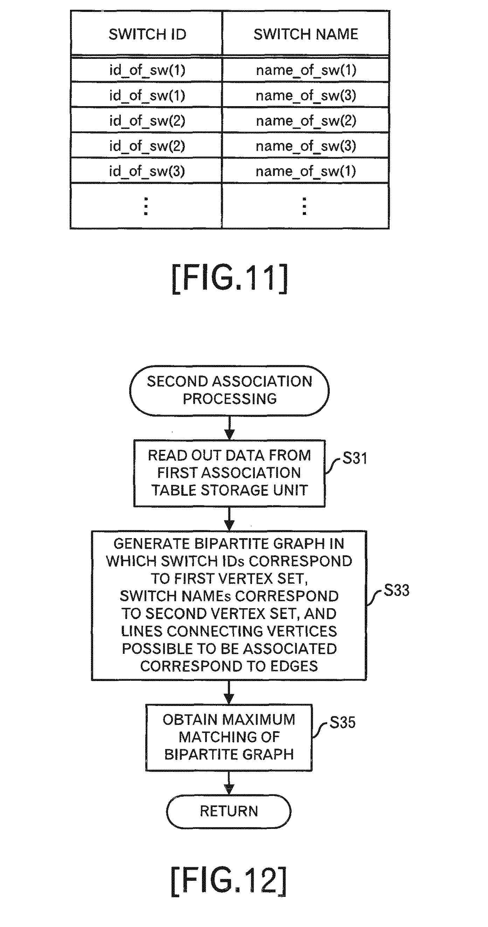

FIG. 11 illustrates an example of data stored in the first association table storage unit 106. In the example of FIG. 11, switch IDs and switch names are stored.

Returning to the explanation of FIG. 7, the first association unit 103 determines whether an unprocessed switch ID exists in the connection data storage unit 102 (step S23). When it is determined that the unprocessed switch ID exists (step S23: Yes route), the processing returns to the processing of the step S13 to perform a processing for a next switch ID. On the other hand, when it is determined that the unprocessed switch ID does not exist (step S23: No route), the processing returns to the calling-source processing.

By performing the processings described above, it is possible to identify a switch ID and a switch name possible to be associated. There is a case where association is decided by the processings so far.

Returning to the explanation of FIG. 6, the manager 100 determines whether association between switch IDs and switch names has been decided (step S3). At the step S3, it is determined whether switch IDs is associated with switch names on a one-to-one correspondence in the first association table storage unit 106.

When it is determined that the association between the switch IDs and the switch names has been decided (step S3: Yes route), the processing shifts to the processing of the step S7 to perform a detection processing. On the other hand, when it is determined that the association between the switch IDs and the switch names has not been decided (step S3: No route), the manager 100 performs a second association processing (step S5). The second association processing is explained by FIGs. 12 to 15.

First, the graph generator 107 included in the manager 100 reads out data (namely, switch IDs and switch names) from the first association table storage unit 106 (FIG. 12: step S31).

The graph generator 107 generates a bipartite graph in which switch IDs correspond to a first vertex set, switch names correspond to a second vertex set, and line segments connecting vertices possible to be associated correspond to edges (step S33). Then, the graph generator 107 stores the generated bipartite graph data in the graph data storage unit 108.

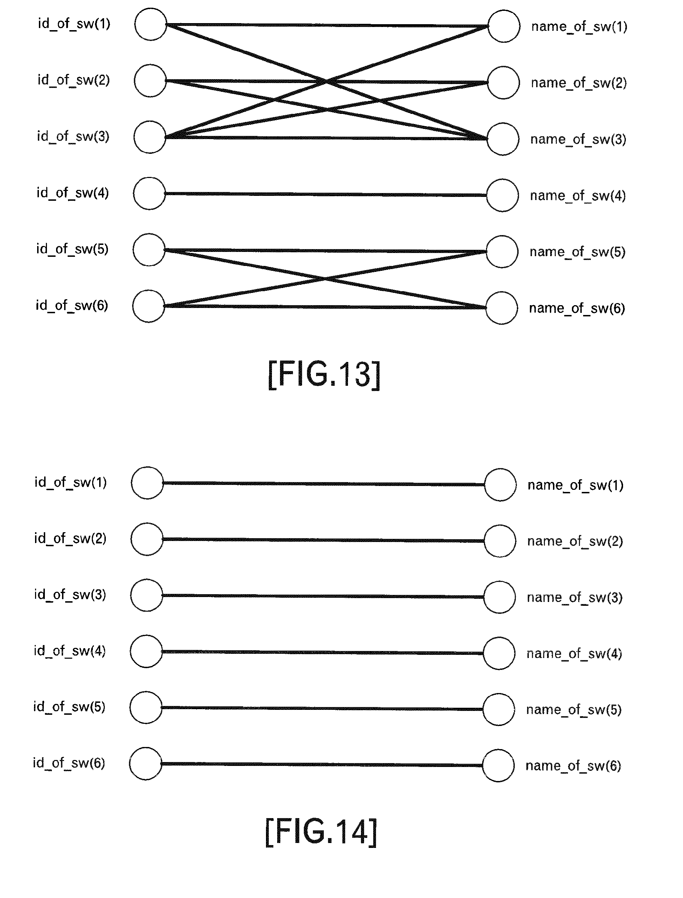

FIG. 13 illustrates an example of a bipartite graph data that will be generated. In FIG. 13, a circle represents a vertex, and a line segment connecting two vertices represents an edge. A switch ID or a switch name is assigned to each vertex. In the example of FIG. 13, there is a possibility that a switch name of a switch whose switch ID is "id_of_sw(1)" is "name_of_sw(1)" or "name_of_sw(3)". There is a possibility that a switch name of a switch whose switch ID is "id_of_sw(2)" is "name_of_sw(2)" or "name_of_sw (3))". There is a possibility that a switch name of a switch whose switch ID is "id_of_sw(3)" is "name_of_sw(1)", "name_of_sw(2)", or "name_of_sw (3)". There is a possibility that a switch name of a switch whose switch ID is "id_of_sw(4)" is "name_of_sw(4)". There is a possibility that a switch name of a switch whose switch ID is "id_of_sw(5)" is "name_of_sw(5)" or "name_of_sw(6)". There is a possibility that a switch name of a switch whose switch ID is "id_of_sw (6)" is "name_of_sw (5)" or "name_of_sw (6)". There is no edge between vertices included in the same vertex set in the bipartite graph.

If a switch ID is associated with a switch name on a one-to-one basis, data of a bipartite graph, which is illustrated in FIG. 14, is obtained. Here, there is no edge sharing vertices with other edges, and edges whose number is the same as the number of switch IDs and the number of switch names are generated.

Returning to the explanation of FIG. 12, the second association unit 109 reads out data of the bipartite graph, which is stored in the graph data storage unit 108, and calculates a maximum matching of the bipartite graph (step S35) . Then, the second association unit 109 stores, in the second association table storage unit 110, data representing association between switch IDs and switch names that are obtained by the maximum matching. Then, the processing returns to the calling-source processing.

Obtaining a maximum matching is obtaining a combination of edges among edges which exist between two vertex sets so that the number of edges becomes a maximum and end points of edges do not overlap. Algorithms like Hungarian method are used in the maximum matching. Since the algorithms of the maximum matching are known well, a further explanation is omitted here.

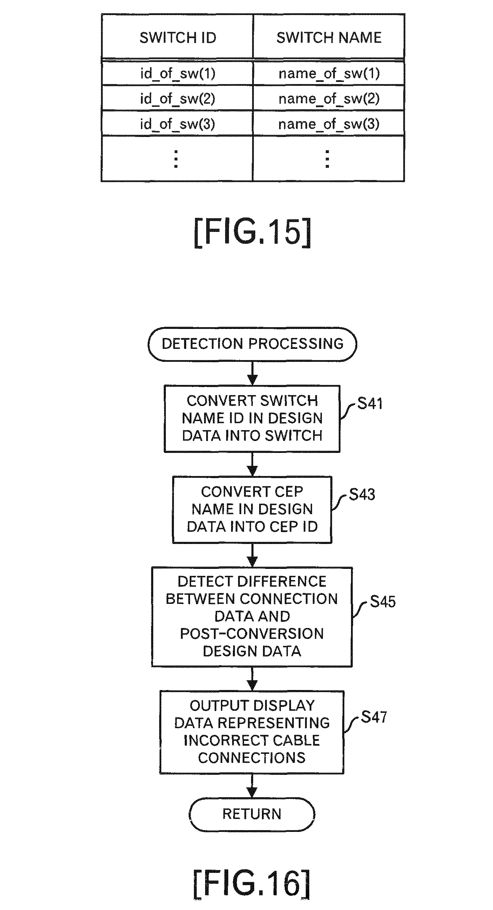

FIG. 15 illustrates an example of data stored in the second association table storage unit 110. In the example of FIG. 15, switch IDs and switch names are stored.

If a maximum matching in the bipartite graph is obtained in this manner, it is possible to identify association so that mismatching is the least as a whole.

Returning to the explanation of FIG. 6, the detector 111 performs a detection processing (step S7) . The detection processing is explained by using FIGs. 16 to 18.

First, the detector 111 reads out design data from the design data storage unit 105, and converts a switch name in the design data into a switch ID according to data representing association, which is stored in the first association table storage unit 106 or the second association table storage unit 110 (FIG. 16: step S41). When it is determined that the association has been decided at the step S3, the data stored in the first association table storage unit 106 is used. When it is determined that the association has not been decided at the step S3, and the processing of the step S5 has been performed, the data stored in the second association table storage unit 110 is used.

The detector 111 converts a CEP name in the design data into a CEP ID according to data representing the association, which is stored in the end point data storage unit 104 (step S43).

The detector 111 detect a difference between connection data stored in the connection data storage unit 102 and design data which has been converted by the processings of the step S41 and S43 (step S45).

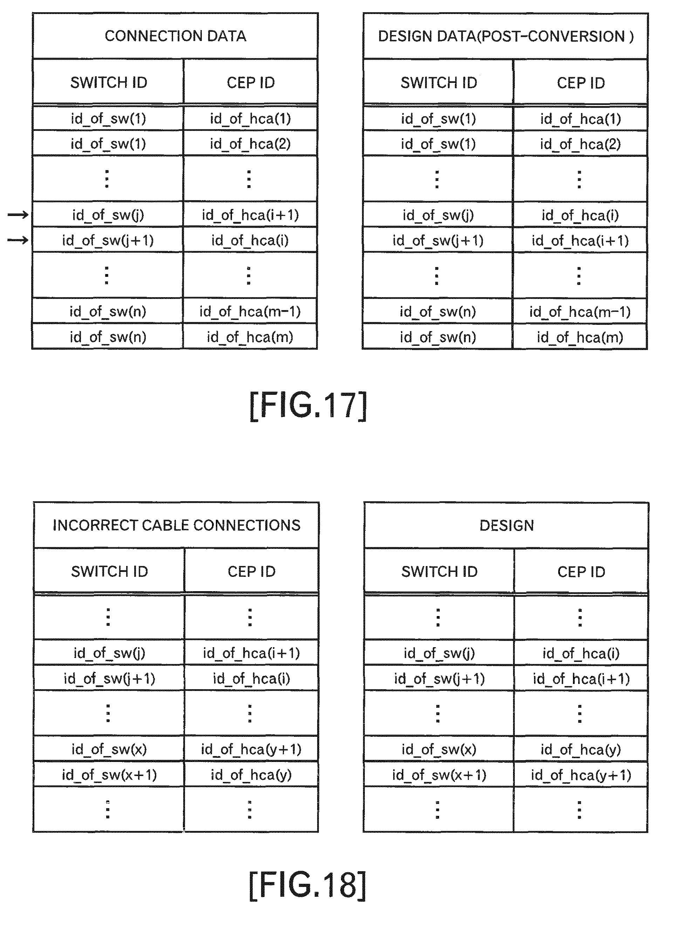

For example, assume that connection data as illustrated in the left side of FIG. 17 is stored in the connection data storage unit 102, and design data as illustrated in the right side of FIG. 17 is obtained by the processings of the step S41 and S43. In this case, there are differences in rows represented by arrows. Specifically, post-conversion design data represents a connection between a switch whose switch ID is "id_of_sw(j)" and a CEP whose CEP ID is "id_of_hca(i). On the other hand, the connection data represents a connection between a switch whose switch ID is "id_of_sw(j)" and a CEP whose CEP ID is "id_of_hca(i+1)". Moreover, the post-conversion design data represents a connection between a switch whose switch ID is "id_of_sw(j+1)" and a CEP whose CEP ID is "id_of_hca(i+1)". On the other hand, the connection data represents a connection between a switch whose switch ID is "id_of_sw (j+1)" and a CEP whose CEP ID is "id_of_hca(i)". These differences are detected by the processing of the step S45.

Returning to the explanation of FIG. 16, the detector 111 generates display data representing incorrect cable connections (in other words, cable connections corresponding to the differences detected at the step S45), and outputs it on a display device (for example, a display) (step S47). Then, the processing ends.

FIG. 18 illustrates an example of display data. In the example of FIG. 18, the left side of FIG. 18 illustrates data representing the incorrect cable connections, and the right side of FIG. 18 illustrates design data of cable connections corresponding to the incorrect cable connections. An administrator checks display data like this. Then, the administrator carries out the following tasks, for example. Specifically, the administrator carries out connecting cables again for the incorrect cable connections. The administrator causes the management apparatus 1 to obtain the connection data again. Then, the administrator checks that miswiring has been removed by comparing the obtained connection data and the converted design data illustrated in the right side of FIG. 17.

### [Embodiment 2]

For example, in the situation as illustrated in FIG. 10, there is a probability that a switch name of a switch whose switch ID is "id_of_sw(1)" is "name_of_sw(1)" or "name_of_sw(2)", and a switch name of a switch whose switch ID is "id_of_sw(2)" is also "name_of_sw(1)" or "name_of_sw(2)". However, the number of CEPs for associating the switch ID "id_of_sw (1)" with the switch name "name_of_sw (1) " is 2 , and the number of CEPs for associating the switch ID "id_of_sw(1) " with the switch name "name_of_sw (2) " is 1. Moreover, the number of CEPs for associating the switch ID "id_of_sw(2)" with the switch name "name_of_sw(1)" is 1, and the number of CEPs for associating the switch ID "id_of_sw(2)" with the switch name "name_of_sw(2)" is 2. Considering this, the switch name of the switch whose switch ID is "id_of_sw(1)" is probably "name_of_sw(1)", and the switch name of the switch whose switch ID is "id_of_sw(2)" is probably "name_of_sw(2)". Therefore, in the second embodiment, the first association processing in the first embodiment will be changed as follows.

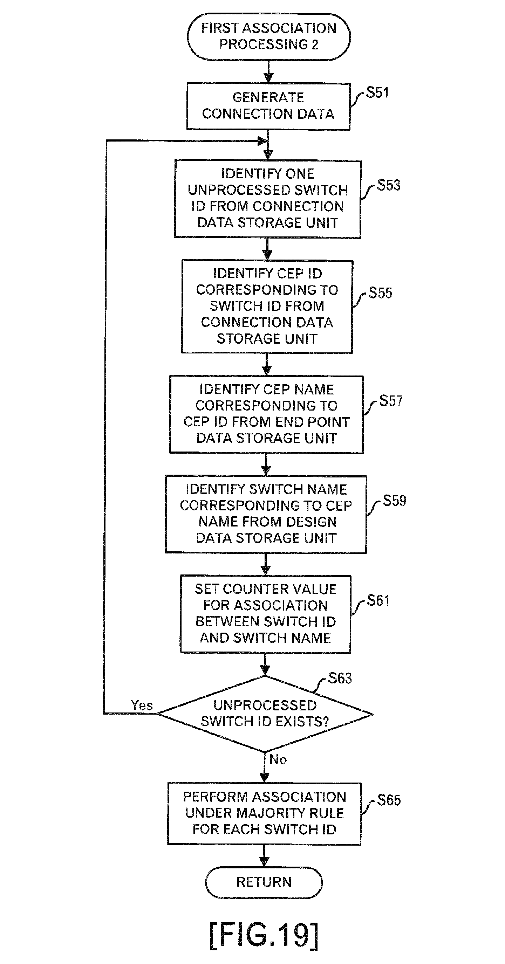

The first association processing in the second embodiment is explained by using FIG. 19. First, the collector 101 included in the manager 100 collects data representing a connection status between switches and CEPs from the computer system 3 , and generates connection data (FIG. 19: step S51). The collector 101 stores the generated connection data in the connection data storage unit 102. A method to collect the data representing the connection status is the same as the method described at the explanation of the step S11.

The collector 101 outputs a request for execution of a processing to the first association unit 103. Accordingly, the first association unit 103 identifies an unprocessed switch ID from the connection data storage unit 102 (step S53).

The first association unit 103 identifies a CEP ID corresponding to the switch ID identified at the step S53 from the connection data storage unit 102 (step S55).

The first association unit 103 identifies a CEP name corresponding to the CEP ID identified at the step S55 from the end point data storage unit 104 (step S57).

The first association unit 103 identifies a switch name corresponding to the CEP name identified at the step S57 from the design data storage unit 105 (step S59).

The first association unit 103 sets a counter value for association between the switch ID identified at the step S53 and the switch name identified at the step S59 in the first association table storage unit 106 (step S61).

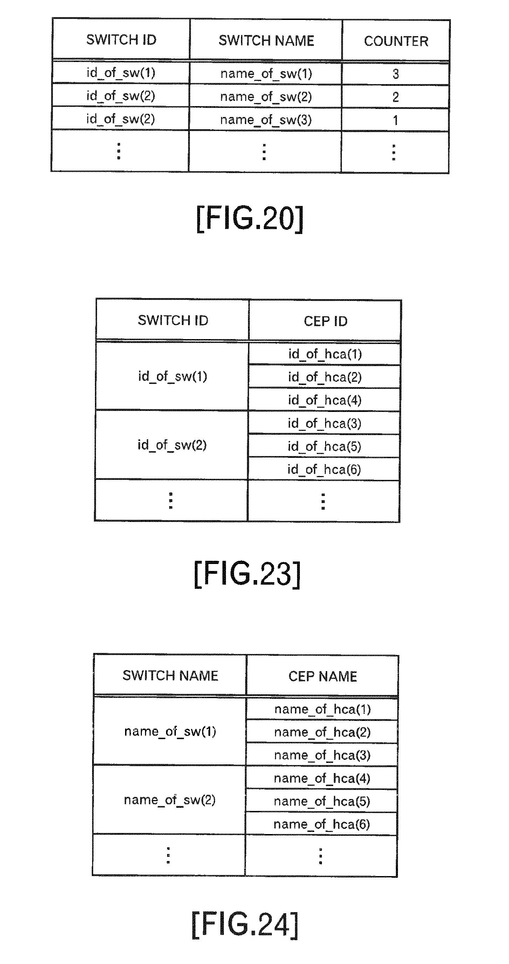

FIG. 20 illustrates an example of data stored in the first association table storage unit 106 in the second embodiment. In the example of FIG. 20, switch IDs, switch names, and counter values are stored. At the step S61, when data representing identical association has already been stored in the first association table storage unit 106, a counter value is incremented by "1". When data representing identical association has not been stored in the first association table storage unit 106, data representing the association is newly stored, and the counter value is set as 1.

Returning to the explanation of FIG. 19, the first association unit 103 determines whether an unprocessed switch ID exists in the connection data storage unit 102 (step S63). When it is determined that the unprocessed switch ID exists (step S63: Yes route), the processing returns to the processing of the step S53 to perform a processing for a next switch ID. On the other hand, when it is determined that the unprocessed switch ID does not exist (step S63: No route), the first association unit 103 performs association under a majority rule for each switch ID (step S65) . For example, when a switch name whose counter value is 2 and a switch name whose counter value is 1 exist for an identical switch ID, the switch ID is associated with the switch name whose counter value is 2. Then, data as illustrated in FIG. 11 (in other words, data which does not include a counter value) is generated by the association under the majority rule, and data stored in the first association table storage unit 106 (in other words, data which includes a counter value) is replaced. Then, the processing returns to the calling-source processing.

By performing the processings as described above, it is possible to employ the most probable association among association between switch IDs and switch names. However, even if these processings are performed, the association is not decided when, for example, switch names which have the same counter value exist. In the case, the second association processing will be performed. For example, when the incorrect cable connections are sparse, and it can be expected that connecting plural wrong cables in a lump hardly happens, it is considered to be effective to perform the processings in this embodiment.

### [Embodiment 3]

For example, in the situation as illustrated in FIG. 10, by performing the processings in the first embodiment, there's a possibility that a switch ID "id_of_sw (1)" is associated with a switch name "name_of_sw(2)", and a switch id "id_of_sw(2)" is associated with a switch name "name_of_sw(1)". By performing association like this, it is supposed that a switch whose switch name is "name_of_sw(1)" is connected to a CEP 5 and a CEP 6, and a switch whose switch name is "name_of_sw(2)" is connected to a CEP 1 and a CEP 2. However, this is improbable considering the design data. Therefore, in a third embodiment, the first embodiment and the second embodiment will be changed as follows:

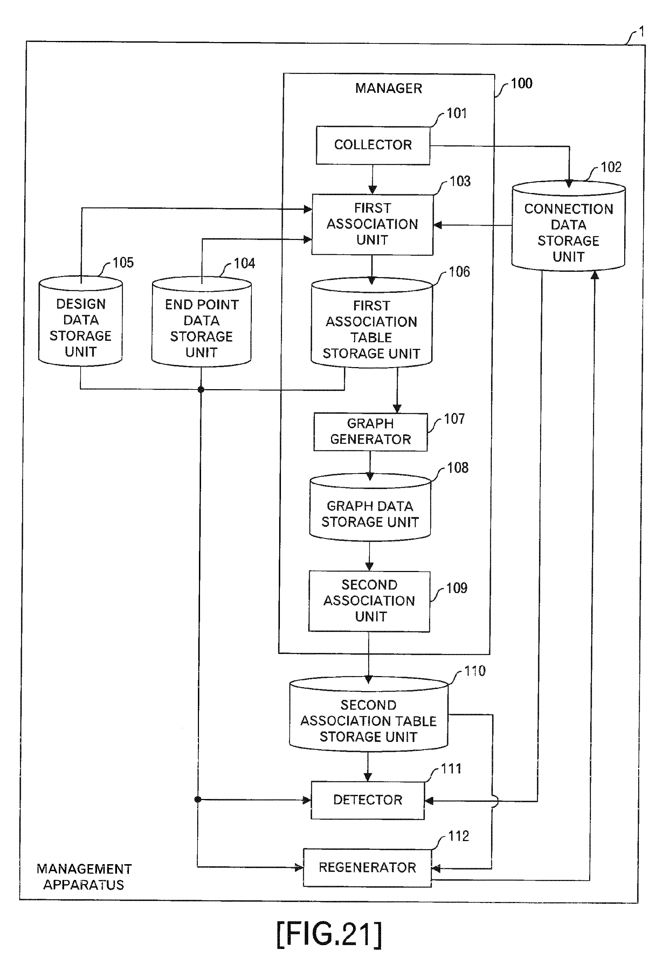

FIG. 21 illustrates a functional block diagram of the management apparatus 1 in the third embodiment. A difference between

FIG. 21 and FIG. 3 is whether a regenerator 112 exists or not. The regenerator 112 regenerates connection data by using data stored in the second association table storage unit 110, data stored in the end point data storage unit 104, and data stored in the design data storage unit 105, and replaces connection data stored in the connection data storage unit 102. Since functions of other processing units and data stored in other storage units are the same as those in the first embodiment and the second embodiment, an explanation is omitted.

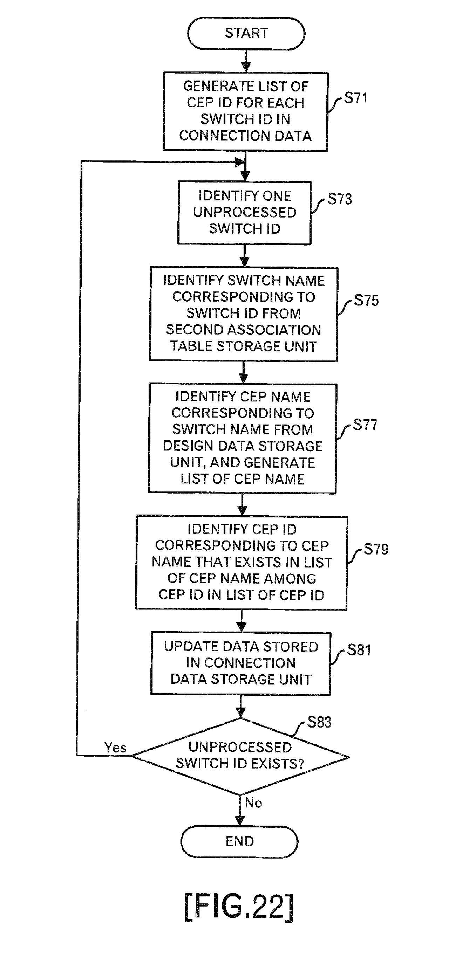

A processing performed by the regenerator 112 is explained by using FIGs. 22 to 24. When an administrator has determined that a result which is outputted as incorrect cable connections is invalid, the administrator requests re-execution of a processing. Then, the regenerator 112 generates a list of CEP IDs for each switch ID in connection data (FIG. 22 : step S71), and stores it in a storage device such as a main memory or the like.

At the step S71, for example, a list as illustrated in FIG. 23 is generated. In the example of FIG. 23, a list of CEP IDs of CEPs, which are connected to switches identified by the switch IDs, is generated for each switch ID.

Returning to the explanation of FIG. 22, the regenerator 112 identifies an unprocessed switch ID (hereinafter referred to a switch ID to be processed) from the list generated at the step S71 (step S73).

The regenerator 112 identifies a switch name (hereinafter referred to as a switch name to be processed) corresponding to the switch ID to be processed from the second association table storage unit 110 (step S75).

The regenerator 112 identifies a CEP name corresponding to the switch name to be processed from the design data storage unit 105, generates a list of CEP names (step S77), and stores it in a storage device such as the main memory or the like.

FIG. 24 illustrates an example of a list generated by the processing of the step S77. In the example of FIG. 24, a list of CEP names of CEPs to be connected to switches identified by the switch names to be processed is generated.

Returning to the explanation of FIG. 22, for each CEP ID included in the list of CEP IDs corresponding to the switch IDs to be processed, the regenerator 112 identifies a CEP name corresponding to the CEP ID from the end point data storage unit 104. Then, the regenerator 112 identifies a CEP name included in the list generated at the step S77 among the identified CEP names, and identifies a CEP ID corresponding to the CEP name from the end point data storage unit 104 (step S79).

The regenerator 112 regenerates connection data using the switch IDs to be processed and the CEP IDs identified at the step S79, and updates the connection data stored in the connection data storage unit 102 for the switch IDs (step S81) . Apart of combinations of the switch IDs to be processed and the CEP IDs, which is stored in the connection data storage unit 102, is to be deleted by the processing of the step S81.

The regenerator 112 determines whether an unprocessed switch ID exists in the list generated at the step S71 (step S83). When it is determined that the unprocessed switch ID exists (step S83: Yes route), the processing returns to the processing of the step S73 to perform a processing for a next switch ID. On the other hand, when it is determined that the unprocessed switch ID does not exist (step S83 : No route), the regenerator 112 requests the manager 100 to perform association again by using updated connection data.

By performing the processings as described above, a result with higher precision is obtained by the association which is performed again since it is possible to remove CEP IDs, which are considered to be invalid from a result of the association which has been performed, from connection data.

### [Embodiment 4]

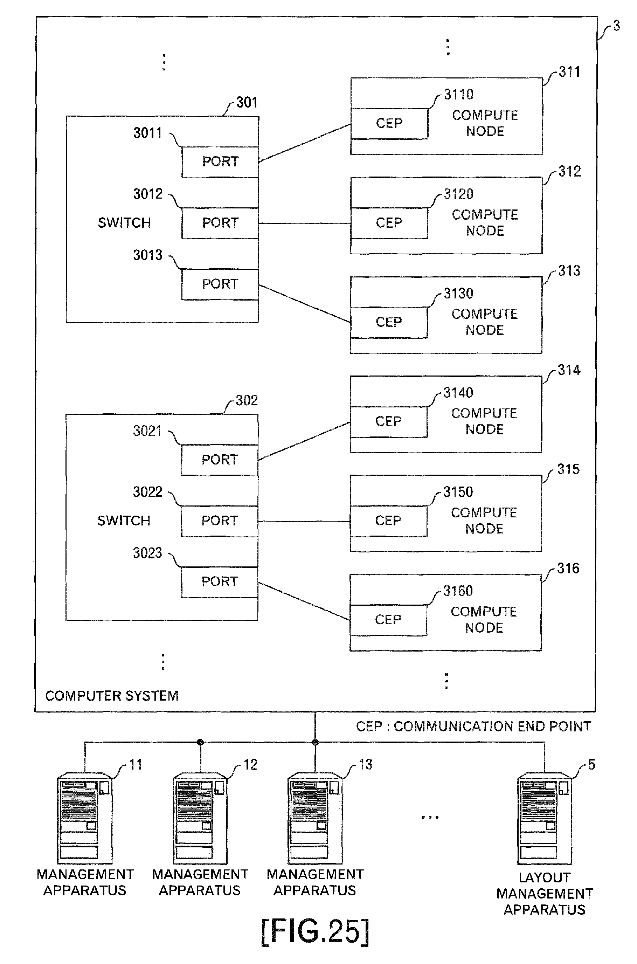

FIG. 25 illustrates an outline of a system in a fourth embodiment. In the fourth embodiment, plural management apparatuses (the management apparatuses 11 to 13) are connected to the computer system 3. Moreover, a layout management apparatus 5 is connected to the computer system 3 and the management apparatuses 11 to 13. The layout management apparatus 5 manages which management apparatuses hold which part of the design data and the connection data by using, for example, a share table. Although the number of the management apparatuses is 3 in FIG. 25, the number is not limited.

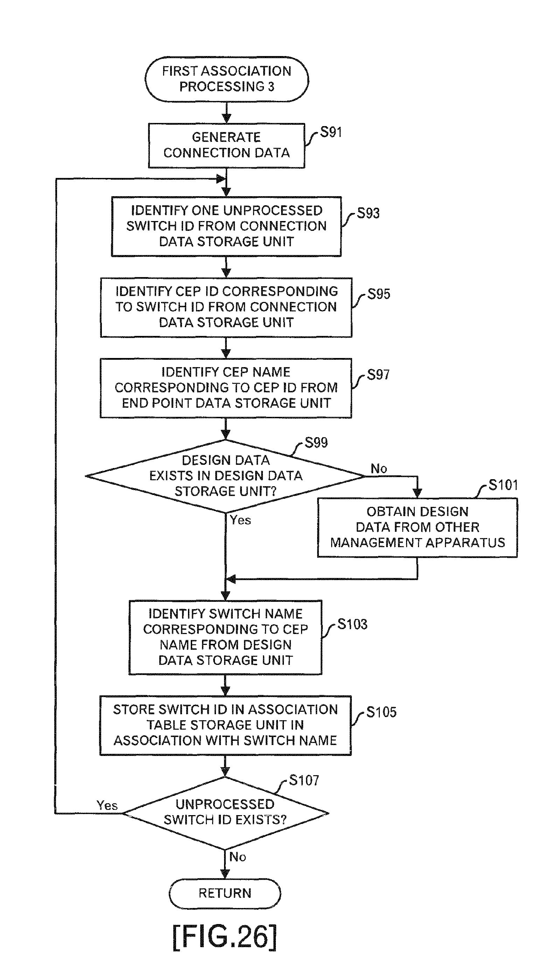

The first association processing in the fourth embodiment is explained by using FIG. 26. In the fourth embodiment, design data is dispersedly arranged in the plural management apparatuses.

The collector 101 included in the manager 100 collects data representing a connection status between switches and CEPs from the computer system 3, and generates connection data (FIG. 26: step S91) . The collector 101 stores the generated connection data in the connection data storage unit 102. A method to collect data representing the connection status is the same as the method described at the explanation of the step S11.

Returning to the explanation of FIG. 26, the collector 101 outputs a request for execution of a processing to the first association unit 103. In response to this, the first association unit 103 identifies an unprocessed switch ID from the connection data storage unit 102 (step S93).

The first association unit 103 identifies a CEP ID corresponding to the switch ID identified at the step S93 from the connection data storage unit 102 (step S95).

The first association unit 103 identifies a CEP name corresponding to the CEP ID identified at the step S95 from the end point data storage unit 104 (step S97).

The first association unit 103 determines whether design data used for a processing is stored in the design data storage unit 105 (step S99). When it is determined that the design data used for a processing is stored in the design data storage unit 105 (step S99: Yes route), the processing shifts to the processing of the step S103 since it is possible to perform the first association processing.

On the other hand, when it is determined that the design data used for a processing is not stored in the design data storage unit 105 (step S99: No route), a notification request to inquire about a management apparatus which has the design data used for the processing is transmitted to the layout management apparatus 5. Then, the first association unit 103 transmits, to the management apparatus which has the design data and is notified of from the layout management apparatus 5, a data transmission request for the design data, and obtains the design data used for the processing from a management apparatus that is a destination of the request (step S101). Then, the first association unit 103 stores the obtained design data in the design data storage unit 105. A part of the data used for the processing is stored in the design data storage unit 105 (namely, there is a case where the own management apparatus has a part of the design data). In such a case, the processing shifts to the No route of the step S99.

The first association unit 103 identifies a switch name corresponding to the CEP name identified at the step S97 from the design data storage unit 105 (step S103).

The first association unit 103 stores the switch ID identified at the step S93 in the first association table storage unit 106 in association with the switch name identified at the step S103 (step S105) . The processing of the step S105 is skipped when data representing the identical association has already been stored in the first association table storage unit 106.

The first association unit 103 determines whether an unprocessed switch ID exists in the connection data storage unit 102 (step S107). When it is determined that the unprocessed switch ID exists (step S107: Yes route), the processing returns to the processing of the step S93 to perform a processing for a next switch ID. On the other hand, when it is determined that the unprocessed switch ID does not exist (step S107: No route), the processing returns to the calling-source processing.

By performing the processings as described above, it is possible to deal with a situation that plural management apparatuses dispersedly perform processings. Although the design data is dispersedly arranged in the plural management apparatuses in the example described above, it is possible to deal with a situation that the connection data is dispersedly arranged in the plural management apparatuses by the same mechanism.

Although the embodiments of this invention were explained above, this invention is not limited to those. For example, the functional block configuration of the management apparatus 1 do not always correspond to a program module configuration.

Moreover, as for the processing flow, as long as the processing results do not change, the turns of the steps may be exchanged. Furthermore, plural steps may be executed in parallel.

Display data generated by the detection processing is not limited to the aforementioned one.

Moreover, although an example in which the design data is converted in the detection processing is illustrated, the connection data may be converted in the detection processing.

Moreover, when the association is not decided even if the second association processing has been performed, an alert may be displayed.

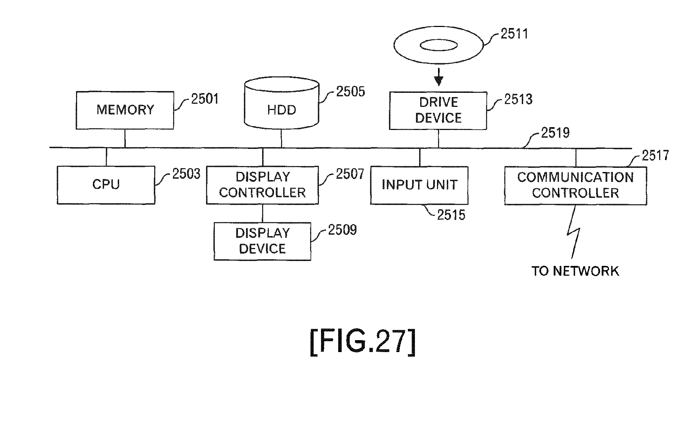

In addition, the management apparatus 1 and compute nodes 311 to 316 are computer devices as illustrated in FIG. 27. That is, a memory 2501 (storage device), a CPU 2503 (processor), a hard disk drive (HDD) 2505, a display controller 2507 connected to a display device 2509, a drive device 2513 for a removable disk 2511, an input unit 2515, and a communication controller 2517 for connection with a network are connected through a bus 2519 as illustrated in FIG. 27. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform predetermined operations. Moreover, intermediate processing data is stored in the memory 2501, and if necessary, it is stored in the HDD 2505. In this embodiment of this technique, the application program to realize the aforementioned functions is stored in the computer-readable, non-transitory removable disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the application programs systematically cooperate with each other, so that various functions as described above in details are realized.

The aforementioned embodiment is summarized as follows:

An information processing system relating to a first aspect of this embodiment includes: (A) plural switches; (B) plural information processing apparatuses; and (C) a management apparatus. And the management apparatus includes: (c1) an association unit that performs associating first switch identifiers included in first information with second switch identifiers included in second information by calculating a maximum matching in a bipartite graph for the first switch identifiers and the second switch identifiers, in which the first information represents designed cable connections between the plural switches and the plural information processing apparatuses, and the second information represents actual cable connections between the plural switches and the plural information processing apparatuses; (c2) a conversion unit that converts, according to a result of the associating, the first switch identifiers included in the first information to the second switch identifiers; and (c3) a detector that detects a difference between the first information that includes the first switch identifiers which were converted and the second information.

Thus, it is possible to identify incorrect cable connections. Therefore, it is possible to reduce a cost required to remove the incorrect cable connections.

Moreover, the association unit may include: (c11) a generator that generates the bipartite graph in which first vertices correspond to the first switch identifiers, second vertices correspond to the second switch identifiers, and edges are line segments that connect the first vertices with the second vertices, in which the first vertices and the second vertices are possible to be associated; and (c12) a calculator that calculates the maximum matching in the bipartite graph generated by the generator. It is possible to perform association between switch identifiers properly by using the bipartite graph.

Moreover, the first information may include the first switch identifiers and identifiers of information processing apparatuses connected with switches identified by the first switch identifiers, and the second information includes the second switch identifiers and identifiers of information processing apparatuses connected with switches identified by the second switch identifiers. And the association unit may include: (c13) a first specification unit that specifies, for each of the second switch identifiers, one or more first switch identifiers of one or more switches that are connected with an information processing apparatus which corresponds to an information processing apparatus connected with the switch of the second switch identifier to specify combinations of first and second switch identifiers possible to be associated. Thus, it is possible to perform association by using the maximum matching in the bipartite graph after narrowing combinations of first and second switch identifiers possible to be associated.

Moreover, the first specification unit includes: (c131) a counter that counts, for each of the second switch identifiers, a number of information processing apparatuses for each of the combinations to determine that a combination whose number of information processing apparatuses is the greatest is a combination of first and second switch identifiers possible to be associated. Thus, it is possible to employ the most probable combination.

Moreover, the management apparatus may further include: (c4) a second specification unit that specifies, for each of combinations which are combinations of the first and second switch identifiers and are included in the result of the associating, identifiers of information processing apparatuses connected with the switch of the first switch identifier included in the combination; a deletion unit that deletes identifiers of information processing apparatuses other than specified identifiers of the information processing apparatuses; and an execution unit that executes the associating. Thus, a result with higher precision can be obtained by the associating performed again since it is possible to remove identifiers of information processing apparatuses considered to be invalid from the result of the associating among identifiers of information processing apparatus, which are included in the second information.

Moreover, the first specification unit may include: (c132) a first obtaining unit that obtains, upon detecting that the management apparatus does not have at least a portion of the first information and the second information, information of an apparatus that has the portion from an allocation management apparatus that manages allocation of the first information and the second information; and a second obtaining unit that obtains the portion from the apparatus identified by obtained information. Thus, for example, it is possible to deal with a situation that processings are performed by, for example, plural management apparatuses.

A management method relating to a second aspect of this embodiment includes: (D) associating first switch identifiers included in first information with second switch identifiers included in second information by calculating a maximum matching in a bipartite graph for the first switch identifiers and the second switch identif iers, in which the first information represents designed cable connections between the plural switches and the plural information processing apparatuses, and the second information represents actual cable connections between the plural switches and the plural information processing apparatuses; (E) converting, according to a result of the associating, the first switch identifiers included in the first information to the second switch identifiers; and detecting a differencebetweenthe first information that includes the first switch identifiers which were converted and the second information.

Incidentally, it is possible to create a program causing a computer to execute the aforementioned processing, and such a program is stored in a computer readable storage medium or storage device such as a flexible disk, CD-ROM, DVD-ROM, magneto-optic disk, a semiconductor memory, and hard disk. In addition, the intermediate processing result is temporarily stored in a storage device such as a main memory or the like.

## Claims

1. An information processing system, comprising:
a plurality of switches;
a plurality of information processing apparatuses; and
a management apparatus, and
wherein the management apparatus comprises:
an association unit that performs associating first switch identifiers included in first information with second switch identifiers included in second information by calculating a maximum matching in a bipartite graph for the first switch identifiers and the second switch identifiers, wherein the first information represents designed cable connections between the plurality of switches and the plurality of information processing apparatuses, and the second information represents actual cable connections between the plurality of switches and the plurality of information processing apparatuses;
a conversion unit that converts, according to a result of the associating, the first switch identifiers included in the first information to the second switch identifiers; and
a detector that detects a difference between the first information that includes the first switch identifiers which were converted and the second information.

2. The information processing system as set forth in claim 1, wherein the association unit comprises:
a generator that generates the bipartite graph in which first vertex set correspond to the first switch identifiers, second vertex set correspond to the second switch identifiers, and edges are line segments that connect the first vertices with the second vertices, wherein the first vertices and the second vertices are possible to be associated; and
a calculator that calculates the maximum matching in the bipartite graph generated by the generator.

3. The information processing system as set forth in claim 2, wherein the first information includes the first switch identifiers and identifiers of information processing apparatuses connected with switches identified by the first switch identifiers, and the second information includes the second switch identifiers and identifiers of information processing apparatuses connected with switches identified by the second switch identifiers, and
the association unit comprises:
a first specification unit that specifies, for each of the second switch identifiers, one or more first switch identifiers of one or more switches that are connected with an information processing apparatus which corresponds to an information processing apparatus connected with the switch of the second switch identifier to specify combinations of first and second switch identifiers possible to be associated.

4. The information processing system as set forth in claim 3, wherein the first specification unit comprises:
a counter that counts, for each of the second switch identifiers, a number of information processing apparatuses for each of the combinations to determine that a combination whose number of information processing apparatuses is the greatest is a combination of first and second switch identifiers possible to be associated.

5. The information processing system as set forth in claim 3 or 4, wherein the management apparatus further comprises:
a second specification unit that specifies, for each of combinations which are combinations of the first and second switch identifiers and are included in the result of the associating, identifiers of information processing apparatuses connected with the switch of the first switch identifier included in the combination;
a deletion unit that deletes identifiers of information processing apparatuses other than specified identifiers of the information processing apparatuses; and
an execution unit that executes the associating.

6. The information processing system as set forth in claim 3 or 4, wherein the first specification unit comprises:
a first obtaining unit that obtains, upon detecting that the management apparatus does not have at least a portion of the first information and the second information, information of an apparatus that has the portion from an allocation management apparatus that manages allocationof the first information and the second information; and
a second obtaining unit that obtains the portion from the apparatus identified by obtained information.

7. A management apparatus that manages a plurality of switches and a plurality of information processing apparatuses, comprising:
an association unit that performs associating first switch identifiers included in first information with second switch identifiers included in second information by calculating a maximum matching in a bipartite graph for the first switch identifiers and the second switch identifiers, wherein the first information represents designed cable connections between the plurality of switches and the plurality of information processing apparatuses, and the second information represents actual cable connections between the plurality of switches and the plurality of information processing apparatuses;
a conversion unit that converts, according to a result of the associating, the first switch identifiers included in the first information to the second switch identifiers; and
a detector that detects a difference between the first information that includes the first switch identifiers which were converted and the second information.

8. A program for causing a computer that manages a plurality of switches and a plurality of information processing apparatuses to execute a process, the process comprising:
associating first switch identifiers included in first information with second switch identifiers included in second information by calculating a maximum matching in a bipartite graph for the first switch identifiers and the second switch identifiers, wherein the first information represents designed cable connections between a plurality of switches which are managed by the computer andapluralityof information processing apparatuses which are managed by the computer, and the second information represents actual cable connections between the plurality of switches and the plurality of information processing apparatuses;
converting, according to a result of the associating, the first switch identifiers included in the first information to the second switch identifiers; and
detecting a difference between the first information that includes the first switch identifiers which were converted and the second information.

9. A management method executed by a computer that manages a plurality of switches and a plurality of information processing apparatuses, comprising:
associating first switch identifiers included in first information with second switch identifiers included in second information by calculating a maximum matching in a bipartite graph for the first switch identifiers and the second switch identifiers, wherein the first information represents designed cable connections between the plurality of switches and the plurality of information processing apparatuses, and the second information represents actual cable connections between the plurality of switches and the plurality of information processing apparatuses;
converting, according to a result of the associating, the first switch identifiers included in the first information to the second switch identifiers; and
detecting a difference between the first information that includes the first switch identifiers which were converted and the second information.
